# DEMANDE DE BREVET EUROPEEN

(11) **EP 3 211 491 A1**
(43) Date de publication de la demande: **30.08.2017**
(21) Numéro de dépôt: 16157655.8
(22) Date de dépôt: 26.02.2016
(51) Int. Cl.: G04R 20/26, G04G 5/00

(54) **METHODE DE REGLAGE AUTOMATIQUE DE L'HEURE D'UNE MONTRE**

(71) Demandeur: ETA SA Manufacture Horlogère Suisse, 2540 Grenchen (CH)
(72) Inventeur: Lagorgette, Pascal, 2502 Bienne (CH); Balli, Fabien, 2502 Biel/Bienne (CH); Balmer, Raphaël, 2824 Vicques (CH); Christe, Laurent, 2504 Bienne (CH); Peters, Jean-Bernard, 2542 Pieterlen (CH)
(74) Mandataire: Goulette, Ludivine

(57) **Abrégé**

La présente invention concerne une méthode de réglage d'une pièce d'horlogerie (10) comprenant un boîtier (10a) muni d'un bracelet (10b) dans lequel est agencé un microcontrôleur (11) alimenté en électricité par une unité d'alimentation (12), ledit microcontrôleur comprenant une base de temps et des zones mémoires et est utilisé afin d'envoyer des signaux de commande vers des moyens d'affichage (13) pour afficher au moins une information temporelle, ladite méthode comprenant les étapes suivantes :
• se munir d'un objet portable comprenant un boitier dans lequel un circuit électronique (21) comportant un microcontrôleur (22), un module d'affichage (23), des moyens de commande (24), une caméra (25) et un module de communication (26), le circuit électronique étant alimenté par une batterie (27).

## Description

La présente invention concerne une méthode de réglage d'une pièce d'horlogerie comprenant un boitier muni d'un bracelet dans lequel est agencé un microcontrôleur alimenté en électricité par une pile ou batterie, ledit microcontrôleur comprenant une base de temps et des zones mémoires et est utilisé afin d'envoyer des signaux de commande vers des moyens d'affichage pour afficher au moins une information temporelle.

### ART ANTERIEUR

On distingue actuellement deux types de montres, les montres mécaniques ne comprenant aucun électronique et les montres dites électroniques fonctionnant avec une pile et un microcontrôleur. Or, les montres électroniques ont énormément évolué pour devenir de plus en plus des montres dites connectées. Ces montres connectées sont munies d'un module de communication utilisant un protocole NFC et/ou Bluetooth permettant l'échange de données avec un autre appareil du type téléphone mobile (aussi appelé smartphone) ou ordinateur portable ou tablette électronique. Cet échange de données permet actuellement le transfert de données d'un capteur situé dans la montre vers le téléphone mobile ou la tablette électronique, ces appareils possédant une puissance de calcul bien supérieure. Cet échange de données permet également l'envoi de données du type notification ou messagerie du téléphone vers la montre de sorte à prévenir l'utilisateur.

Ces montres électroniques peuvent utiliser, pour l'affichage des informations de temps comme l'heure ou la date, des moyens analogiques comme des aiguilles ou des disques ou des écrans électroniques utilisant les technologies LCD, LED ou OLED. Or, l'utilisation d'aiguilles ou de disques nécessitent l'utilisation d'au moins un moteur et de rouages de sorte que le réglage de l'heure se fait manuellement pouvant entraîner des imprécisions et des décalages.

### RESUME DE L'INVENTION

La présente invention a pour but de pallier aux inconvénients de l'art antérieur en proposant une méthode pour régler une information temporelle sur une montre par l'intermédiaire d'un autre appareil qui soit simple et fiable.

A cet effet, l'invention concerne une méthode de réglage d'une pièce d'horlogerie comprenant un boitier muni d'un bracelet dans lequel est agencé un microcontrôleur 11 alimenté en électricité par une pile ou batterie 12, ledit microcontrôleur 11 comprenant une base de temps et des zones mémoires et est utilisé afin d'envoyer des signaux de commande vers des moyens d'affichage 13 pour afficher au moins une information temporelle, ladite méthode comprenant les étapes suivantes :
- se munir d'un objet portable comprenant un boitier dans lequel un circuit électronique 21 comportant un microcontrôleur 22, un module d'affichage 23, des moyens de commande 24, une caméra 25 et un module de communication 26, le circuit électronique étant alimenté par une batterie 27.
   tester l'exactitude de l'information temporelle de ladite pièce d'horlogerie en utilisant la caméra de l'objet portable pour la comparer à une information temporelle provenant d'une source externe ;
- envoyer l'information temporelle de la source externe de la montre via un moyen émetteur si une différence est détectée, la montre comprenant un moyen récepteur pour recevoir cette information temporelle et est agencé pour agir sur ses moyens d'affichage pour afficher cette information temporelle correcte ;
- vérifier que l'information correcte est affichée.

Un avantage de cette méthode est de permettre un réglage automatique puisque le procédé consiste à détecter un décalage entre l'information temporelle affichée et une information temporelle fiable venant d'une source externe et à envoyer une commande de correction pour afficher l'information temporelle juste.

Dans un premier mode de réalisation avantageux, l'envoi de ladite information temporelle se fait par transmission optique, ledit émetteur de l'objet portable étant une source de lumière lors que le récepteur de la montre est au moins un phototransistor.

Dans un second mode de réalisation avantageux, ledit émetteur de l'objet portable est le module d'affichage alors que le récepteur de la montre est au moins un phototransistor.

Dans un troisième mode de réalisation avantageux, les moyens d'affichage de la montre sont agencés au niveau d'un cadran ledit au moins un phototransistor étant également agencé au niveau du cadran, l'envoi de l'information temporelle consistant à :
- définir sur le module d'affichage une zone dont la surface et la forme est identique à celle de la montre ;
- plaquer ladite montre sur le module d'affichage de sorte que la montre et la zone définie du module d'affichage correspondent ;
- varier au moins un paramètre du module d'affichage dans ladite zone défini pour générer un signal lumineux au phototransistor afin qu'il puisse générer un signal électrique correspondant à un niveau logique bas ou un signal électrique correspondant à un niveau logique haut.

. Dans un cinquième mode de réalisation avantageux, ladite montre comprend deux phototransistors agencés au niveau du cadran, ladite zone définie étant divisée en une première et une seconde portion permettant à chaque phototransistor de recevoir un signal lumineux distinct.

Dans un sixième mode de réalisation avantageux, l'un des signaux lumineux est un signal d'horloge alors que l'autre signal lumineux est un signal de données permettant une transmission synchrone.

Dans un septième mode de réalisation avantageux, la zone définie du module d'affichage comprend en outre une troisième portion agencée entre la première et la seconde portion afin de faire office de portion morte empêchant les interférences optiques.

Dans un huitième mode de réalisation avantageux, le test de l'exactitude de l'information temporelle affichée consiste à :
- prendre, à un instant donné, une image des moyens d'affichage de la pièce d'horlogerie et une image d'une information temporelle d'une source externe ;
- traiter l'image des moyens d'affichage de la pièce d'horlogerie en comparant la position des moyens d'affichage par rapport à une série de repères pour détecter l'information temporelle affichée ;
- comparer l'information temporelle détectée avec l'image de l'information temporelle de la source externe.

Dans un autre mode de réalisation avantageux, la vérification de l'envoi consiste à :
- prendre, à un instant donné, une image des moyens d'affichage de la pièce d'horlogerie et une image d'une information temporelle d'une source externe ;
- traiter l'image des moyens d'affichage de la pièce d'horlogerie en comparant la position des moyens d'affichage par rapport à une série de repères pour détecter l'information temporelle affichée ;
- comparer l'information temporelle détectée avec l'image de l'information temporelle de la source externe.

Dans un autre mode de réalisation avantageux, la transmission de données se fait par ondes radio, ledit émetteur de l'objet portable étant le module de communication alors la pièce d'horlogerie comprend une unité de communication servant de récepteur.

Dans un autre mode de réalisation, la méthode comprend une outre une étape préliminaire de calibration de la détection des aiguilles consistant à :
- envoyer à la montre, via leur circuit de communication une commande pour afficher une information temporelle définie ;
- envoyer une commande aux moyens d'affichage par le microcontrôleur afin que les moyens d'affichage puissent afficher ladite information temporelle définie. ;
- utiliser la caméra de l'objet portable électronique pour détecter une information temporelle affichée et la comparer à l'information temporelle définie, si l'information temporelle détectée n'est pas identique à l'information temporelle définie, opérer une correction.

Dans un autre mode de réalisation, la méthode comprend une outre une étape préliminaire de synchronisation consistant à :
- envoyer à la montre, via leur circuit de communication une commande pour afficher une information temporelle définie ;
- envoyer une commande aux moyens d'affichage par le microcontrôleur afin que les moyens d'affichage puissent afficher ladite information temporelle définie ;
- vérifier visuellement l'information temporelle affichée et la comparer à l'information temporelle définie, si l'information temporelle visualisée n'est pas identique à l'information temporelle définie, opérer une correction.

### BREVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement l'ensemble selon l'invention;
- Les figures 2, 3a, 3b représentent la méthode de réglage d'une pièce d'horlogerie
- Les figures 4a et 4b représentent un mode de transmission asynchrone pour l'envoi de données vers la pièce d'horlogerie;
- Les figures 5 à 7 représentent un mode de transmission synchrone vers la pièce d'horlogerie;

### DESCRIPTION DETAILLEE

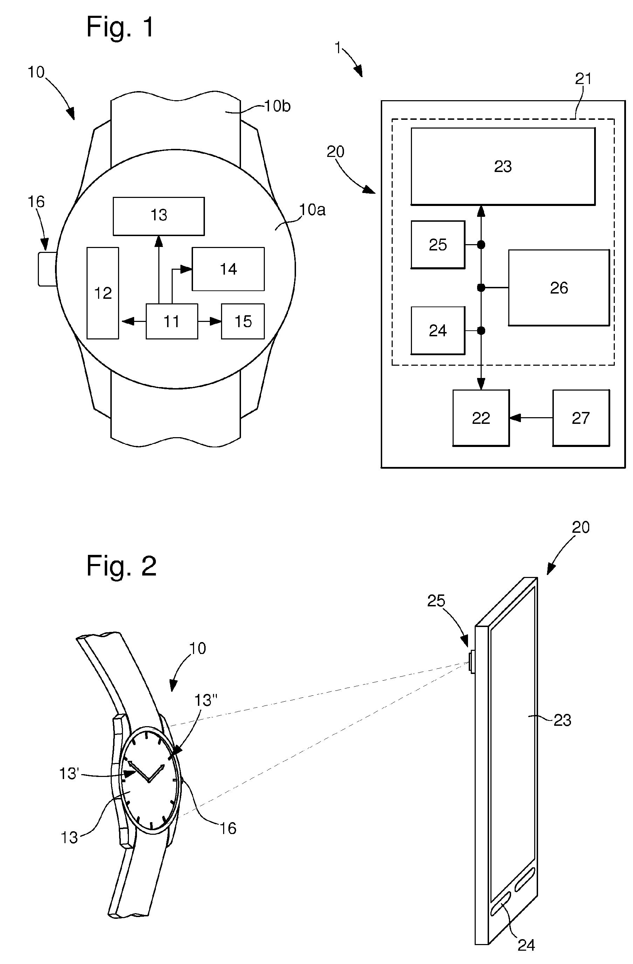

Sur la figure 1, un ensemble 1 selon l'invention est représenté. Un tel ensemble 1 comprend au moins une montre 10 et un appareil électronique portable 20 comme un téléphone mobile ou une tablette électronique.

La montre 10 comprend donc un boîtier 10a muni d'un bracelet 10b. Dans ce boîtier, un microcontrôleur 11 alimenté en électricité par une unité d'alimentation 12 comme une pile ou une batterie est agencé, ledit microcontrôleur 11 comprenant une base de temps et des zones mémoires. Ce microcontrôleur 11 est utilisé afin d'envoyer des signaux de commande vers des moyens d'affichage 13, ces moyens d'affichage 13 pouvant comprendre des aiguilles 13' ou des disques. Ces moyens d'affichage permettent l'affichage d'une information temporelle comme l'heure mais peuvent aussi afficher la date, le quantième ou la phase de la lune. Le microcontrôleur 11 est connecté également avec des moyens de commande 16 pouvant être une couronne, des poussoirs ou des moyens tactiles et une unité de communication 14 utilisant un protocole du type Bluetooth ou NFC. Le microcontrôleur 11 peut également communiquer avec un capteur 15.

L'appareil électronique portable 20 comprend un boîtier dans lequel un circuit électronique 21 est agencé. Ce circuit électronique 21 porte le microcontrôleur ou processeur 22, le module d'affichage 23, les moyens de commande 24, un capteur optique faisant office de caméra ou d'appareil photo 25 et un module de communication 26, le tout étant alimenté par une batterie 27.

La présente invention cherche alors à fournir un procédé permettant le réglage d'au moins une information temporelle via l'appareil électronique portable. Pour cela, la première étape consiste à détecter la présence d'un décalage temporel entre l'information affichée par la montre 10 et une source fiable. Pour cela, cette première étape consiste à utiliser la caméra 25 pour prendre une photographie des moyens d'affichage 13 de la montre. Cette photographie est utilisée par un programme de traitement. Ce programme de traitement analyse la position des moyens d'affichage 13 par rapport à des repères du cadran. Dans le cas où les moyens d'affichage 13 sont des aiguilles 13', les repères sont les index 13" du cadran 13"' comme visible à la figure 2.

Pour cela, il est nécessaire que l'incrément de positionnement des aiguilles soit suffisamment grand pour ne pas avoir des problèmes de parallaxe. Plus il y aura d'aiguilles 13' sur le mouvement électronique et plus la distance entre chaque aiguille 13' et le cadran 13"' sera grande, plus le risque de voir apparaitre des problèmes de parallaxe est grand. Il est faudra donc adapter le pas de l'aiguille 13' en fonction de la distance aiguille/cadran.

Le programme de traitement va prendre référence sur les index 13". Elle va également vérifier l'ellipse formée par le cadran 13"', la glace ou la lunette afin d'évaluer la parallaxe. Si l'ellipse est trop « écrasée », cela signifie qu'on aura une erreur de parallaxe trop importante. Dans le cas idéal, l'application ou le programme de traitement devrait voir un cercle.

- Une fois l'indication temporelle des moyens d'affichage 13 déterminée, le programme de traitement compare l'information temporelle détectée à une source temporelle. Cette source temporelle peut provenir de la base de temps interne de l'appareil électronique portable 20 ou d'une source externe. Cette source externe peut être un signal radiofréquence ou provenir d'un réseau du type internet. Préférentiellement, une photographie de la source temporelle est effectuée en même temps que la photographie des moyens d'affichage 13 de sorte que l'information temporelle détectée soit comparée à la source fiable, le tout au même instant.

Si le programme de traitement détecte une anomalie c'est-à-dire une différence entre l'information temporelle affichée et la source utilisée, une opération de réglage est réalisée.

Une deuxième étape qui est une opération de réglage consiste à envoyer une information temporelle correcte à la montre 10. Cette information temporelle est envoyée depuis l'appareil électronique portable 20 vers la montre 10 qui comprend un moyen récepteur. Dans un mode de réalisation préféré, l'information temporelle est envoyée via une modulation optique. Pour cela, le capteur 15 fait office de moyen récepteur et est un capteur optique ou phototransistor 15' capable de détecter un flux lumineux et de le transformer en signal électrique.

Ce phototransistor 15' est avantageusement situé sous le cadran 13"', celui-ci présentant une ouverture ou une portion transparente ou est réalisé dans un matériau partiellement transparent. Bien entendu, ce photorécepteur pourra être agencé sur le fond de la boîte ou au niveau de la tranche de cette boîte.

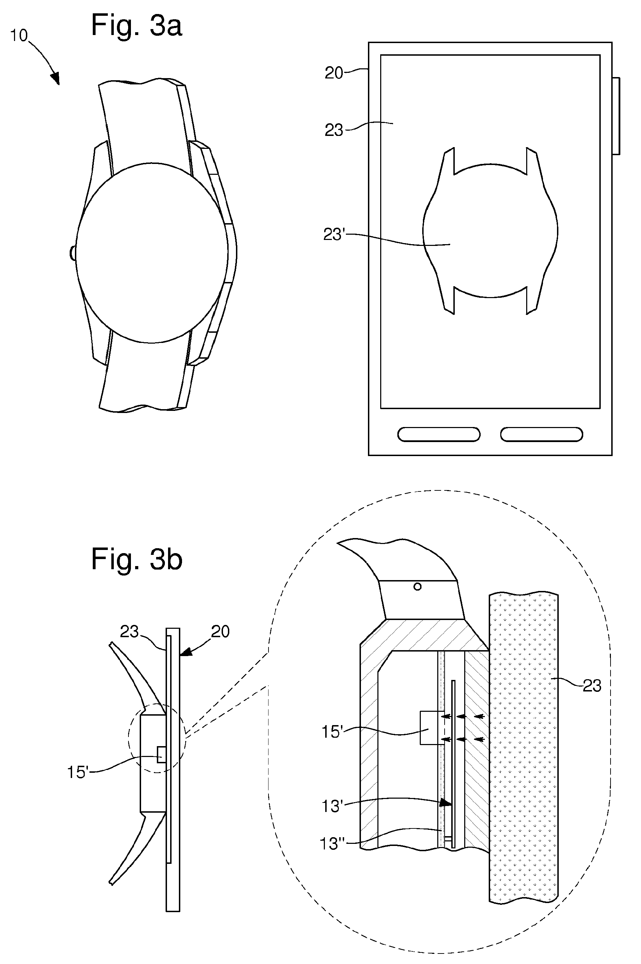

Pour produire un signal lumineux, le procédé utilise avantageusement l'écran d'affichage 23 de l'appareil électronique portable 20. L'utilisation de cet écran permet astucieusement de former, sur la surface de l'écran 23, une zone 23' dont la forme et la surface sont sensiblement identiques à la forme et aux dimensions de la zone au niveau de laquelle le photorécepteur est agencé. On comprend par-là que dans le cas où le photorécepteur est agencé au niveau du cadran, la zone 23' aura la forme et la surface sensiblement identiques à celles du cadran 13"' de la montre 10. De cette façon, l'utilisateur peut plaquer la montre 10 sur la zone 23' de l'écran de l'appareil électronique portable 20 de sorte que le cadran 13"' soit en regard dudit écran. Cette zone spécifique 23' sera la zone par laquelle la modulation optique sera opérée comme visible aux figures 3a et 3b. Cette configuration permet d'être certain que la lumière captée par le phototransistor 15' sera la lumière générée par ledit écran d'affichage 23 et permet d'éviter les pertes de luminosité étant donné que la montre est plaquée sur l'écran d'affichage 23.

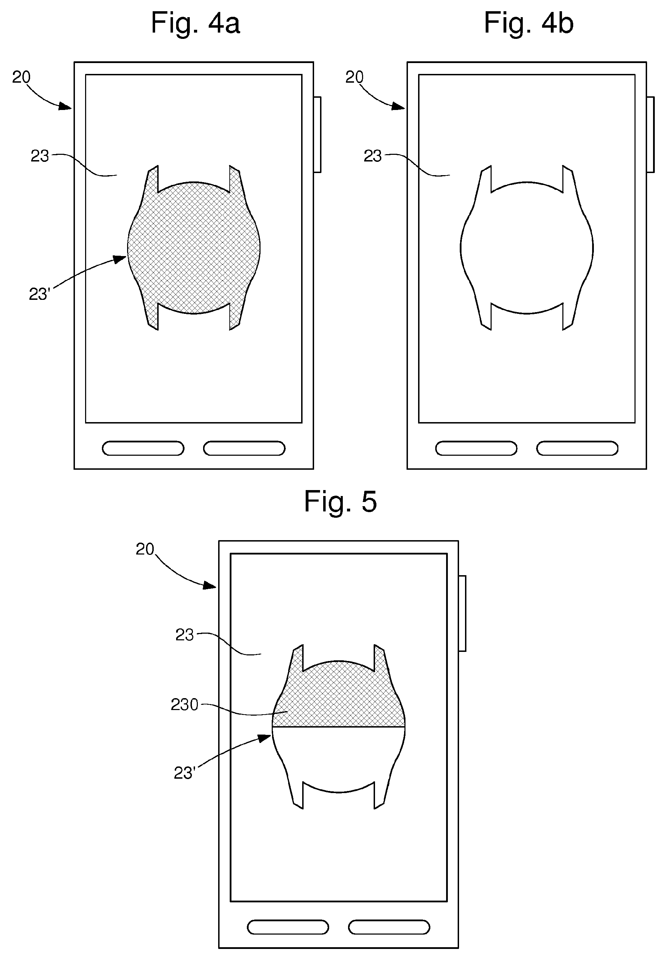

Pour transmettre une information, la modulation optique est utilisée, celle-ci pouvant être asynchrone. Pour cette transmission optique asynchrone, la zone 23' de l'écran23, dont la forme et la surface sont sensiblement identiques à la forme et aux dimension du cadran 13"' de la montre 10, est commandé pour afficher soit du noir signifiant un '0' logique soit une lumière blanche signifiant un '1' logique, le tout formant une information binaire comme visible aux figures 4a et 4b.

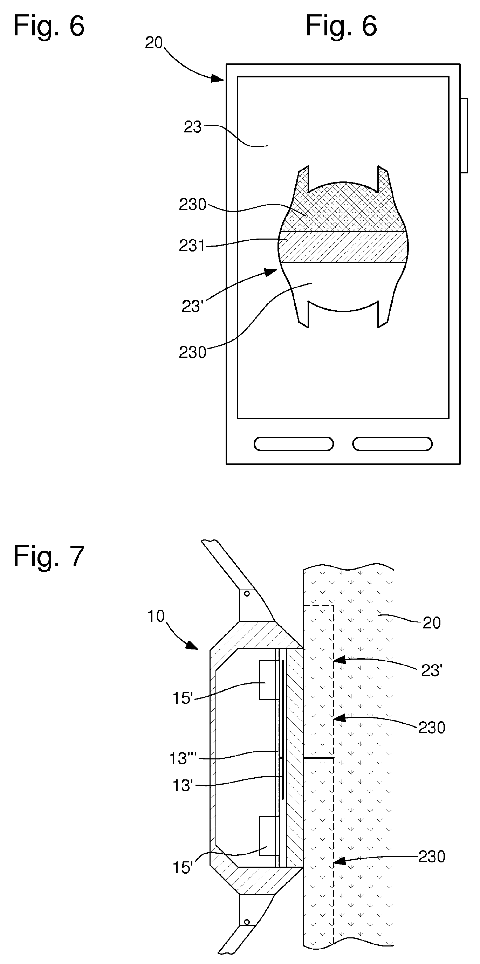

Dans une variante, il peut être prévu de faire de la transmission de données de type synchrone comme visible aux figures 5 à 7. Pour cela, la montre 10 doit être munie de deux phototransistors 15'. Idéalement, ils seront agencés de façon diamétralement opposée afin d'être éloignés l'un de l'autre. En effet, le principe d'une transmission optique synchrone consiste à avoir une transmission d'un signal d'horlogère et la transmission d'un signal de données. La zone 23' de l'écran d'affichage 23 dont la forme et la surface sont sensiblement identiques à la forme et aux dimensions du cadran de la montre est alors divisée en au moins deux parties 230, chaque partie 230 permet l'envoi d'une information d'horlogère ou de données aux phototransistors. La transmission synchrone se caractérise en ayant l'émetteur et le récepteur cadencés avec la même horloge. Le récepteur reçoit de façon continue (même lorsque aucun bit n'est transmis) les informations au rythme où l'émetteur les envoie. Chaque partie 230 de l'écran 23 devient alors blanche ou noire afin d'envoyer un '0' logique ou un '1' logique.

Astucieusement, il pourra être prévu que la zone 23' de l'écran d'affichage dont la forme et la surface sont sensiblement identiques à la forme et aux dimension du cadran 13"' de la montre soit divisée en trois parties avec deux zones dites actives 230, celles-ci deviennent alors blanches ou noires afin d'envoyer un '0' logique ou un '1' logique. Une troisième zone dite passive 231 est située entre les deux zones actives 230. Cette zone passive 231 sert de zone morte afin d'éviter les interférences optiques entres les deux zones actives 230. En effet, en cas d'alignement imparfait, cette zone morte 231 fait office de tampon pour éviter que les zones actives n'envoient un signal optique vers le phototransistor qui ne leur est pas dédié.

Bien entendu, l'invention n'est pas limitée au mode de réalisation présenté de sorte qu'en cas de transmission optique, le ou les phototransistors peuvent être agencés au niveau de la carrure ou du fond de la montre. Il est également possible que la transmission de données se fasse par signaux de type NFC ou Bluetooth.

Une fois que les données sont transmisses à la montre, le microcontrôleur 11 de celle-ci envoie des commandes aux moyens d'affichage afin qu'ils puissent afficher une information correcte. Dans le cas d'aiguilles, le microcontrôleur 11 envoie une commande pour activer les moteurs et déplacer les aiguilles.

Dans une troisième étape, l'objectif est de vérifier que la correction a bien été faite. Pour cela, cette étape consiste à utiliser la caméra 25 pour prendre une photographie des moyens d'affichage 13. Cette photographie est alors utilisée par un programme de traitement. Ce programme de traitement analyse la position des moyens d'affichage par rapport à des repères et va comparer l'information temporelle par rapport à une source fiable.

Dans une variante de cette troisième étape, la vérification pourra être faite par transfert de données via une transmission sans fil de type Bluetooth, la montre 10 envoyant les données de l'information temporelle qu'elle affiche.

Dans une première variante, il est prévu une étape préliminaire. Cette étape préliminaire consiste en une étape de calibration de la détection des aiguilles. En effet, selon les conditions de luminosité, il est possible qu'il y ait des jeux d'ombres ou de reflets qui peuvent entraîner une mauvaise détection de l'information temporelle. Cette étape de calibration consiste donc à envoyer, de l'appareil électronique portable, vers la montre 10, via leur circuit de communication 14, 26, une commande pour afficher une information temporelle définie à afficher comme par exemple 10h10. Suite à la réception de cette commande, le microcontrôleur 11 envoie une commande aux moyens d'affichage 13 afin que ceux-ci puissent afficher ladite information temporelle définie.

Une fois cette information affichée, le processus de détection est enclenché de sorte que l'objet portable électronique 20 utilise sa caméra 25 pour détecter l'information temporelle affichée. Si l'information temporelle détectée est égale à l'information temporelle définie alors aucune autre action n'est faite et la montre peut afficher de nouveau une information temporelle actuelle. Par contre, si l'information temporelle détectée n'est pas égale à l'information temporelle définie alors une correction est opérée. Cette correction peut se présenter sous la forme d'un offset c'est-à-dire d'une valeur à ajouter pour obtenir la valeur correcte. Cette correction peut être suivie par une autre phase de test consistant à détecter de nouveau l'information temporelle affichée et voir si la correction a été prise en compte.

Il pourra être également prévu dans cette variante que la synchronisation des moyens d'affichage 13 comme les aiguilles soit faite. Pour cela, l'information temporelle définie est portée à la connaissance de l'utilisateur via les moyens d'affichage de l'objet portable électronique. Cette information temporelle définie est envoyée à la montre afin que celle-ci l'affiche avec ses moyens d'affichage. Il est alors aisé pour l'utilisateur de vérifier que l'information temporelle définie est correcte et de modifier cette affichage en cas de constatation de décalages. Préférentiellement, cette synchronisation des aiguilles est réalisée antérieurement à la calibration de la détection des aiguilles.

Dans une seconde variante de réalisation, la montres est équipée d'une cellule solaire afin d'assurer une fourniture d'énergie pour recharger une batterie ou accumulateur. Astucieusement, cette cellule solaire est utilisée comme photorécepteur lors de la transmission d'informations. En effet, dans une cellule solaire, il existe une relation de proportionnalité entre le flux de lumière capté par la cellule solaire et le courant produit qu'elle produit (courant de charge). Le courant produit/converti par la cellule solaire peut être mesuré, par exemple en court-circuitant la cellule solaire via une résistance shunt. Ce courant donne une image du flux de lumière passant dans la cellule solaire.

La relation entre le flux de lumière capté et le courant signifie qu'en modulant la taille de la surface active de la zone émettrice du smartphone, pour une intensité lumineuse fixe, il est possible de moduler le courant converti/produit par la cellule solaire. A partir de cela, il est possible d'effectuer une transmission ternaire et non plus uniquement binaire, en utilisant un seul récepteur optique. Le fait d'avoir plusieurs niveaux de courant permet d'utiliser des codages plus complexes et donc plus sûrs. Par exemple, un codage du type Manchester.

Un premier avantage est de pouvoir combiner le signal d'horloge à celui des données, permettant une transmission synchrone plus fiable qu'une transmission asynchrone.

Le second avantage est d'utiliser la cellule solaire comme source d'énergie et en alternance comme récepteur de données.

Un troisième avantage est que la transmission optique devient indépendante de l'intensité lumineuse de l'émetteur, pour autant que celle-ci soit stable pendant la transmission. En effet, la modulation d'amplitude se fait en réduisant ou augmentant la surface active, ce qui permet facilement de s'adapter d'un smartphone à un autre, dont les réglages de l'intensité lumineuse diffèrent de l'un à l'autre.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Ainsi, il sera possible de régler la totalité des informations temporelles d'une montre 10. En effet, il est connu des montres affichant l'heure mais aussi la date, le mois et le jour ainsi que l'année bissextile ou non. De ce fait, lors d'une période prolongée d'inactivité ou lors de la révision, la présente invention permet le réglage ou la mise à jour de toutes les informations temporelles délivrées par la montre, en une seule fois.

## Revendications

1. Méthode de réglage d'une pièce d'horlogerie (10) comprenant un boîtier (10a) muni d'un bracelet (10b) dans lequel est agencé un microcontrôleur (11) alimenté en électricité par une unité d'alimentation (12), ledit microcontrôleur comprenant une base de temps et des zones mémoires et est utilisé afin d'envoyer des signaux de commande vers des moyens d'affichage (13) pour afficher au moins une information temporelle, **caractérisé en ce que** ladite méthode comprend les étapes suivantes :
• se munir d'un objet portable comprenant un boitier dans lequel un circuit électronique (21) comportant un microcontrôleur (22), un module d'affichage (23), des moyens de commande (24), une caméra (25) et un module de communication (26), le circuit électronique étant alimenté par une batterie (27) ;
tester l'exactitude de l'information temporelle de ladite pièce d'horlogerie en utilisant la caméra de l'objet portable pour la comparer à une information temporelle provenant d'une source externe ;
• envoyer l'information temporelle de la source externe de la montre via un moyen émetteur si une différence est détectée, la montre comprenant un moyen récepteur (15) pour recevoir cette information temporelle et est agencée pour agir sur ses moyens d'affichage (13) pour afficher cette information temporelle correcte ;
• vérifier que l'information correcte est affichée.

2. Méthode selon la revendication 1, **caractérisée en ce que** l'envoi de ladite information temporelle se fait par transmission optique, ledit moyen émetteur de l'objet portable (20) étant une source de lumière lors que le récepteur de la montre est au moins un phototransistor (15').

3. Méthode selon la revendication 2, **caractérisée en ce que** ledit émetteur de l'objet portable est le module d'affichage (23) alors que le récepteur de la montre est au moins un phototransistor (15').

4. Méthode selon la revendication 3, **caractérisée en ce que** les moyens d'affichage (13) de la montre (10) sont agencés au niveau d'un cadran (13'") ledit au moins un phototransistor (15') étant également agencé au niveau du cadran, l'envoi de l'information temporelle consistant à :
- définir, sur le module d'affichage (23), une zone (23') dont la surface et la forme est identique à celle de la montre ;
- plaquer ladite montre sur le module d'affichage de sorte que la montre et la zone définie du module d'affichage correspondent ;
- varier au moins un paramètre du module d'affichage (23) dans ladite zone définie pour générer un signal lumineux au phototransistor afin qu'il puisse générer un signal électrique correspondant à un niveau logique bas ou un signal électrique correspondant à un niveau logique haut.

5. Méthode selon la revendication 4, **caractérisée en ce que** ladite montre comprend deux phototransistors (15') agencés au niveau du cadran, ladite zone définie étant divisée en une première et une seconde portion (230) permettant à chaque phototransistor de revoir un signal lumineux distinct.

6. Méthode selon la revendication 5, **caractérisée en ce que** l'un des signaux lumineux est un signal d'horloge alors que l'autre signal lumineux est un signal de donnée permettant une transmission synchrone.

7. Méthode selon les revendications 5 ou 6, **caractérisée en ce que** la zone définie du module d'affichage comprend en outre une troisième portion (231) agencée entre la première et la seconde portion (230) afin de faire office de portion morte empêchant les interférences optiques.

8. Méthode selon l'une des revendications précédentes, **caractérisée en ce que** le test de l'exactitude de l'information temporelle affichée consiste à :
- prendre, à un instant donné, une image des moyens d'affichage de la pièce d'horlogerie et une image d'une information temporelle d'une source externe ;
- traiter l'image des moyens d'affichage de la pièce d'horlogerie en comparant la position des moyens d'affichage par rapport à une série de repères pour détecter l'information temporelle affichée ;
- comparer l'information temporelle détectée avec l'image de l'information temporelle de la source externe.

9. Méthode selon l'une des revendications précédentes, **caractérisée en ce que** la vérification de l'envoi consiste à :
- prendre, à un instant donné, une image des moyens d'affichage de la pièce d'horlogerie et une image d'une information temporelle d'une source externe ;
- traiter l'image des moyens d'affichage de la pièce d'horlogerie en comparant la positions des moyens d'affichage par rapport à une série de repères pour détecter l'information temporelle affichée ;
- comparer l'information temporelle détectée avec l'image de l'information temporelle de la source externe.

10. Méthode selon la revendication 1, **caractérisée en ce que** la transmission de données se fait par ondes radio, ledit émetteur de l'objet portable étant le module de communication alors la pièce d'horlogerie comprend une unité de communication servant de récepteur.

11. Méthode selon l'une des revendications précédentes, **caractérisée en ce qu'**elle comprend une outre une étape préliminaire de calibration de la détection des aiguilles consistant à :
- envoyer à la montre, via leur circuit de communication une commande pour afficher une information temporelle définie ;
- envoyer une commande aux moyens d'affichage 13 par le microcontrôleur (11) afin que les moyens d'affichage (13) puissent afficher ladite information temporelle définie ;
- utiliser la caméra (25) de l'objet portable électronique (20) pour détecter une information temporelle affichée et la comparer à l'information temporelle définie, si l'information temporelle détectée n'est pas identique à l'information temporelle définie, opérer une correction.

12. Méthode selon la revendication 11, **caractérisée en ce qu'**elle comprend une outre une étape préliminaire de synchronisation consistant à :
- envoyer à la montre, via leur circuit de communication une commande pour afficher une information temporelle définie ;
- envoyer une commande aux moyens d'affichage par le microcontrôleur afin que les moyens d'affichage puissent afficher ladite information temporelle définie. ;
- vérifier visuellement l'information temporelle affichée et la comparer à l'information temporelle définie, si l'information temporelle visualisée n'est pas identique à l'information temporelle définie, opérer une correction.
